# EUROPEAN PATENT SPECIFICATION

(11) **EP 0 790 398 B1**
(45) Date of publication and mention of the grant of the patent: **15.05.2002**
(21) Application number: 96102379.3
(22) Date of filing: 16.02.1996
(51) Int. Cl.: F02F 1/42

(54) **Engine having a plurality of intake ports for each cylinder**
Brennkraftmaschine mit mehreren Einlassventilen pro Zylinder
Moteur à combustion interne avec une pluralité de conduits d'admission par cylindres

(43) Date of publication of application: 20.08.1997
(73) Proprietor: ISUZU MOTORS LIMITED, Shinagawa-ku, Tokyo (JP)
(72) Inventor: Metoki, Naohito, Fujisawa-shi, Kanagawa (JP); Yanagisawa, Naoki, Fujisawa-shi, Kanagawa (JP); Kasai, Hideo, Fujisawa-shi, Kanagawa (JP)
(74) Representative: Schaumburg, Thoenes, Thurn Patentanwälte

(56) References cited:
- EP-A- 0 619 424
- DE-C- 4 040 948
- FR-A- 1 192 664
- FR-A- 1 437 898
- FR-A- 2 427 478

## Description

The present invention relates to an engine according to the first part of claim 1, and more particularly to such an engine which can generate a plurality of swirl flows directed to the same direction in the cylinder.

Engines having a plurality of intake ports for each cylinder are known in the art. Such engines as mentioned in the first part of claim 1 are disclosed for example in EP-A-0 619 424. One of the drawings of this publication is shown as Figure 10 of the accompanying drawings. Figure 10 is a plan section of one cylinder of an engine having a plurality of cylinders in line. The cylinder 3 which defines a combustion chamber has two intake ports 1 and 2 and at least one exhaust port (not shown). The single-dot line 17 coincides with a center line of a crankshaft of the engine and also with a longitudinal direction of a cylinder block. 0 designates a center of the cylinder 3. Center lines 16 and 27 of the intake ports 1 and 2 generally extend parallel to each other and cross the crankshaft line 17 at right angles. External air is introduced into the cylinder 3 through the first and second intake ports 1 and 2 as indicated by the broken arrows respectively. The first intake port 1 is a helical port to form a first swirl a1 in the combustion chamber 3. The first swirl a1 flows along an inner peripheral wall of the cylinder 3 in a clockwise direction. The second intake port 2 is a straight port 2 and generates a second swirl b. The second intake port 2 has a recess 4 at its downstream end. The recess 4 reverses the air flow so that a second swirl b also flows in the same direction as the first swirl a1. The first and second swirls a1 and b are combined to a collective swirl S in the combustion chamber 3. The collective swirl S also flows along an inner peripheral wall fo the combustion chamber 3 or rotates clockwise in the cylinder 3. This structure provides a relatively strong swirl S with a simple air intake configuration.

However, experiments revealed that the first helical intake port 1 creates not only the swirl a1 but also another swirl a2 since the helical shape causes the intake air to rotate about a center axis 01 of an intake valve (not shown) during an intake stroke of a piston (not shown). The swirl a2 is directed to the second intake port 2 so that it conflicts with the swirl b from the second intake port 2. As a result, the swirl b is weakened and obtained is a collective swirl S not so strong as desired.

Another prior art arrangement relating to a multi-intake valve engine is disclosed in EP-A-0 281 015. One of the drawings of this publication is also shown in Figure 11 of the accompanying drawings (some lines are erased for the sake of clarification and 100 is added to reference numerals). This engine has first and second intake ports 117a and 117b for each cylinder and the second intake port 117b has a sickle element 102 to change an air flow direction as indicated by the arrow 112. Therefore, part of an intake air in an intake manifold 103 which flows into the second intake port 117b is deviated by the sickle 102 to flow toward a peripheral wall of a cylinder or combustion chamber as indicated by the arrow 112. The air enters the combustion chamber from a second exit opening 116b. At the same time, the remainder of the intake air flows into the first intake port 117a and enters the combustion chamber from a first exit opening 116a. Reference numeral 120 designates a fuel injector and 119 designates exhaust ports. This arrangement, however, has a similar disadvantage which the above-mentioned EP-A-0 619 424 has since no modification is made on the first intake port 117a. Specifically, a swirl resulting from the first intake port 117a and that from the second intake port 117b may conflict in the combustion chamber.

An object of the present invention is to provide an engine having a plurality of intake ports which can create a stronger swirl by eliminating conflict among swirls resulting from the intake ports.

This problem is solved by an engine according to claim 1.

The engine according to the present invention has first and second intake ports for each cylinder and these intake ports extend generally parallel to each other. The cylinder defines a combustion chamber. The combustion chamber is circular in plan cross section. The first intake port opens to the combustion chamber at its exit opening and a first swirl is generated from the first intake port. The second intake port opens to the combustion chamber at its exit opening and a second swirl is generated from the second intake port. The first and second swirls become a collective swirl in the combustion chamber. The collective swirl rotates along an inner periphery of the cylinder. The first intake port exit opening is downstream of the second intake port exit opening in terms of a rotating direction of the collective swirl. The second intake port has a recess near its downstream end to reverse an air flow in the second intake port such that the second swirl be directed to a tangential direction of the combustion chamber. The first intake port has a projection in one lateral wall and a recess in the opposite lateral wall such that the first swirl is entirely directed to a tangential direction of the combustion chamber. Therefore, the first and second swirls respectively flow in the same direction the collective swirl flows. In other words, the first and second swirls become a single combined flow of air and do not conflict against each other in the combustion chamber.

Further embodiments of the invention are described in the subclaims.

The following description explains embodiments of the invention with reference to the drawings in which
- FIG. 1: is a plan section of one cylinder of an engine having first and second intake ports for each cylinder according to the present invention;
- FIG. 2: is a sectional view taken along the line A-A of FIG. 1 showing a vertical section of a first intake port shown in FIG. 1;
- FIG. 3: is a sectional view taken along the line B-B of FIGs. 1 and 2 showing a transverse section of the first intake port;
- FIG. 4: is a sectional view taken along the line C-C of FIGs. 1 and 2 showing another transverse section of the first intake port;
- FIG. 5: is a sectional view taken along the line D-D of FIGs. 1 and 2 showing still another transverse section of the first intake port;
- FIG. 6: is a sectional view taken along the line E-E of FIG. 1 showing a vertical section of a second intake port;
- FIGs. 7 and 8: illustrate relation between a swirl ratio and valve lift to show a difference between the present invention and a prior art shown in FIG. 10 under different conditions respectively;
- FIG. 9: illustrates a modification of the second intake port;
- FIG. 10: illustrates a prior art arrangement; and
- FIG. 11: illustrates another prior art arrangement.

Now, a preferred embodiment of the present invention will be described with reference to the accompanying drawings.

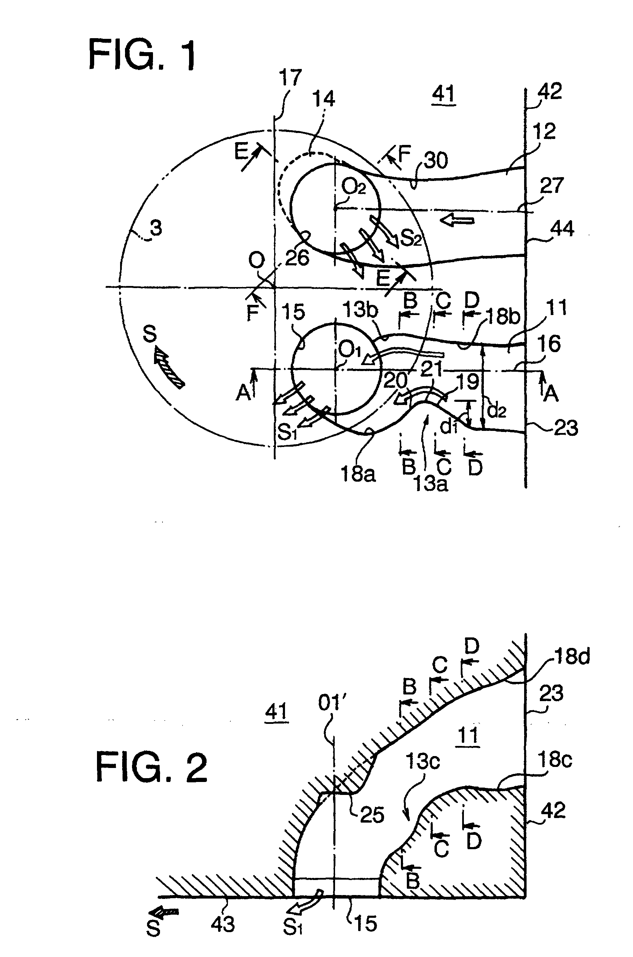

Referring to Figure 1, illustrated is a plan sectional view of one cylinder 3 of an engine having a plurality of cylinders in line in a longitudinal direction 17 of the engine. The single dot line 17 also indicates an axial direction of a crankshaft (not shown) of the engine. The cylinder 3 defines a combustion chamber and has first and second intake ports 11 and 12. These intake ports 11 and 12 generally extend in parallel to each other and cross the single dot line 17 at right angles. The first and second intake ports 11 and 12 are formed in a cylinder head 41.

The first intake port 11 extends from a first entrance opening 23 formed in an end wall 42 of the cylinder head 41 to a first exit opening 15 formed in a bottom wall 43 (Figure 2) of the cylinder head 41. The first entrance opening 23 is generally rectangular and the first exit opening 15 is circular in cross section. 01 indicates a center of the first exit opening 15. A single dot line 16 extending through the first exit opening center 01 and crossing the crankshaft axis 17 at right angles does not indicate the center line of the first intake port 11. The center line or longitudinal axis of the first intake port 11 extends parallel to the line 16 with a certain clearance. In Figure 1, the center line (not shown) of the first intake port 11 extends below the single dot line 16. The first intake port 11 has a large midway projection 13a in its one lateral wall (left side wall) 18a and a small downstream recess 13b in the opposite lateral wall (right side wall) 18b such that the air leaving the first intake port 11 creates a single swirl S1 flowing along the peripheral wall of the cylinder 3. The projection 13a is generally triangle in a plan section, having an entrance side slope 19 and an exit side slope 20. A peak 21 of the triangular projection 13a is rounded to smoothly join the two slopes 19 and 20. The height d1 of the triangular projection 13a is about one third of a width d2 of the first intake port 11 on the entrance side of the projection 13a (d1 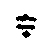 d2/3). The recess 13b defines a gentle curve. The left side wall 18a of the first intake port 11 is a wall furthest from the second intake port 12. The right side wall 18b of the first intake port 11 is the closest to the second intake port 12. Referring to Figure 2, the first intake port 11 also has a shallow recess 13c in its bottom wall 18c at its middle. This recess 13c causes the air to flow in a left downwardly diagonal direction in Figure 2 as indicated by the unshaded arrow (or the direction of the swirl S1 in Figure 1). Accordingly, substantially no air is directed to the right downwardly diagonal direction in Figure 2. Referring back to Figure 1, in sum, the first intake port 11 has a configuration which can guide the entire air to flow in the same direction as indicated by the three unshaded arrows S1.

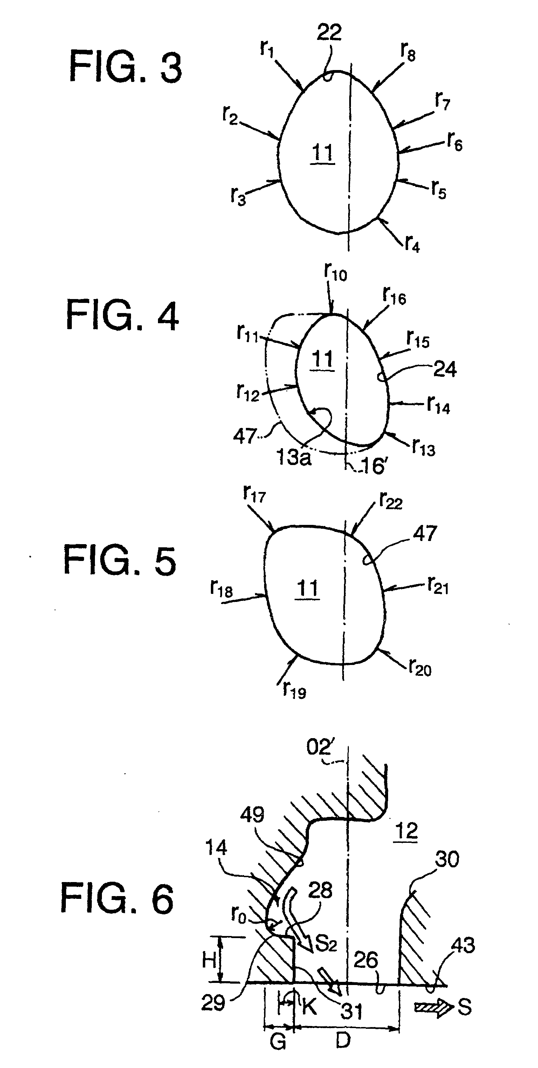

The second intake port 12 extends from a second entrance opening 44 formed in the end wall 42 of the cylinder head 41 to a second exit opening 26 formed in the bottom wall 43 (Figure 2) of the cylinder head 41. The second entrance opening 44 is generally rectangular and the second exit opening 26 is circular in cross section. 02 indicates a center of the second exit opening 26. A single dot line 27 extends from the second exit opening center 02 to a center of the second entrance opening 44. The second intake port 12 does not extend exactly straight but gently curves toward the first intake port 11 from its intermediate portion. However, the second intake port 12 might be referred to as a straight port in a certain case. It also has a recess 14 at its downstream end to create a swirl S2. Details of the recess 14 are illustrated in Figure 6. Referring to Figure 6, the recess 14 is a wedge-like recess formed near the exit opening 26 of the second intake port 12. Its cross section is generally a right-angled triangle having a hypotenuse 49 and a shorter side 28. The hypotenuse 49 and the shorter side 28 are smoothly joined by a rounded corner 29 having a radius ro. The shorter side 28 is generally parallel to the bottom wall 43 of the cylinder head 41. The configuration of the recess 14 is determined such that an intake air flowing along an inner wall 30 of the second intake port 12 be reversed as indicated by the unshaded arrows and consequently the second swirl S2 leaving the exit opening 26 of the second intake port 12 is directed in the same direction as the main swirl S as indicated by the shaded arrow (right directed arrow in Figure 6). Substantially no air is directed to the left in Figure 6. Preferably the distance H from the bottom wall 43 of the cylinder head 41 to the flat portion 28 is between 10% and 30% of the diameter D of the exit opening 26 (0.1D < H ≤ 0.3D), the depth G of the recess 14 is between 10% and 40% of the exit opening diameter D (0.1D < G ≤ 0.4D), the radius ro of the arcuate corner 29 is equal to or below 20% of the exit opening diameter D (ro ≤ 0.2D) and the length K of the shorter side or flat portion 28 is between 50% and 60% of the depth G of the recess 14 (0.5G < K ≤ 0.6G).

The first and second swirls S1 and S2 leaving the first and second exit openings 15 and 26 respectively flow along a periphery of the combustion chamber 3 clockwise so that they become a collective swirl S in the combustion chamber 3. The opening 26 of the second intake port 12 is positioned upstream of the opening 15 of the first intake port 11 in terms of the clockwise flow direction of the swirl S. First and second intake valves (not shown) are provided for the first and second intake ports 11 and 12 respectively. An axis of the first intake valve coincides with the single dot line 01' (Figure 2) and that of the second intake valve coincides with the single dot line 02' (Figure 6).

Referring to Figure 2, depicted is the vertical section of the first intake port 11. The first intake port 11 extends from the entrance opening 23 formed in the cylinder head side wall 42 to the exit opening 15 formed in the cylinder head bottom wall 43 in a gently downwardly curved direction. A flat portion 25 is formed midway in an upper wall 18d of the first intake port 11 above the exit opening 15 and a bore for the first intake valve (not shown) is drilled upwardly into the cylinder head 41 from this flat portion 25.

As understood from Figures 1 and 2, the transverse section of the first intake port 11 changes from the entrance opening 23 to the exit opening 15. Three of these transverse sections are illustrated in Figures 3 to 5 as taken along the lines B-B, C-C and D-D of Figure 1 respectively. The cross section of the line B-B is the section at the approximate end of the projection 13a, that of the line C-C is the section at the approximate top of the projection 13a and that of the line D-D is the section at the approximate start of the projection 13a. Each of these sections is formed from a number of curvatures having various radii. The sectional configuration 22 shown in Figure 3 is defined by eight kinds of curvatures having eight different radii r1 to r8 and assumes a relatively circular shape. The section 22 is relatively close to a circle since the exit opening 15 is a circular opening. The sectional shape 47 shown in Figure 5 is defined by arcs having six radii r17 to r22. This section 47 assumes a generally rectangular shape having rounded corners and curved sides. The section 47 is relatively close to rectangular since the entrance opening 23 has a generally rectangular cross section. The cross section 24 shown in Figure 4 is defined by radii r10 to t16. In other words, the cross section of the triangular projection 13a as taken at its peak 21 (i.e., a left half of the section shown in Figure 4) is defined by the three radii r10 to r12 and the right half of the cross section (i.e., the half on the side of the second intake port 12) is defined by the four radii r13 to r16. The right half of the cross section 24 is almost the same as the right half of its downstream cross section 47 shown in Figure 5. The cross section 24 shown in Figure 4 assumes a generally oval shape having a major axis 16'. The line 16' crosses the line 16 (Figure 1) at right angles in a plane perpendicular to a sheet of the drawing of Figure 1.

Now, an operation of the engine will be described.

Referring back to Figure 1, the intake stroke of a piston (not shown) of the engine introduces an external air into the first intake port 11 from the entrance opening 23, and an approximate right half of the air flow (upper half of the air flow in the illustration) firstly proceeds generally straight along the line 16 as indicated by the upper unshaded arrow and then is deflected to the left by the recess 13b (i.e., in the direction of the three unshaded arrows). Meanwhile, an approximate left half flow of air (lower half of the air flow in the illustration) is midway deviated by the projection 13a as indicated by the lower unshaded arrow. Specifically, the approximate half of the air flows along the slope 19, the top 21 and the slope 20 of the projection 13a so that it is directed to be apart from the line 16. When the two kinds of air flow meet at the exit opening 15, they become a single collective or composite air flow, i.e, the first swirl S1 which is generally directed to a clockwise tangential direction of the combustion chamber 3 as indicated by the three unshaded arrows. The swirl S1 does not have components directed toward the second intake port 12.

Simultaneously, the intake stroke of the piston introduces the air into the second intake port 12. The air in the second intake port 12 flows generally straight along the line 27 as indicated by the unshaded arrow and is reversed at the downstream end by the- recess 14 so that the second swirl S2 generally directed to the clockwise tangential direction of the combustion chamber 3 also results from the second exit opening 26. Accordingly, the collective swirl S (= S1 + S2) has a strong intensity.

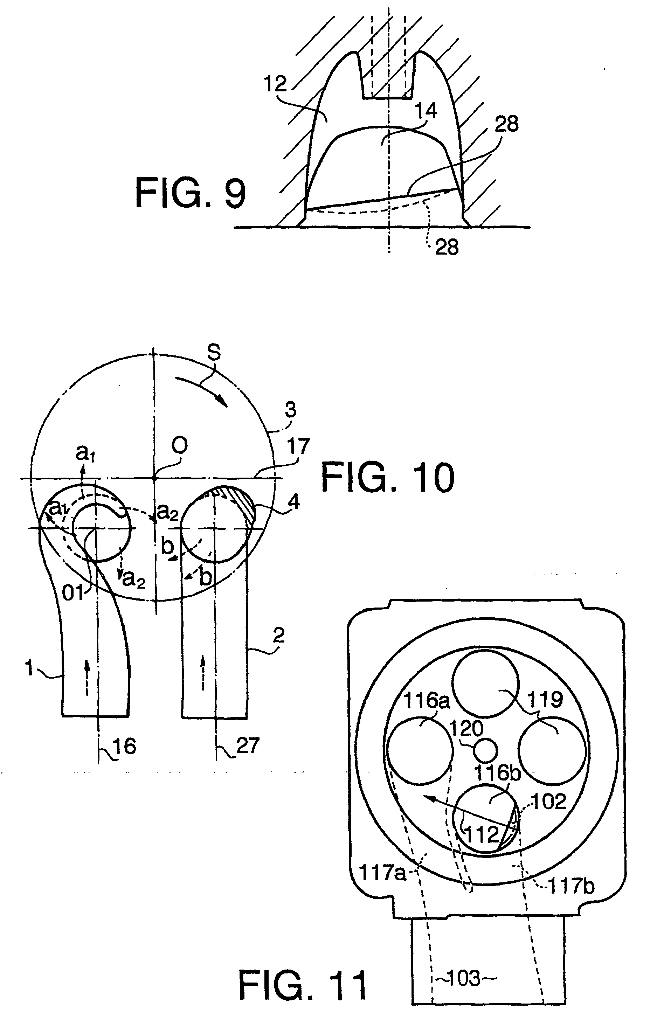

As understood from the foregoing, the first swirl S1 and the second swirl S2 are directed in the clockwise tangential directions respectively so that these two swirls do not interfere with each other in the combustion chamber 3 and the strong swirl S is obtained. The strong swirl contributes to better combustion and reduced smokes in an exhaust gas. These advantages can be realized without making major changes to the existing multi-intake-port engine (e.g., the one shown in Figure 10). Therefore, the engine of the present invention can achieve a high volumetric efficiency, which in turn results in improved engine output and fuel consumption ratio. In addition, since the projection 13a is formed in a midway of the first intake port 11 and it has a relatively gentle slope configuration in the air flow direction, the throttling loss of the intake air is small.

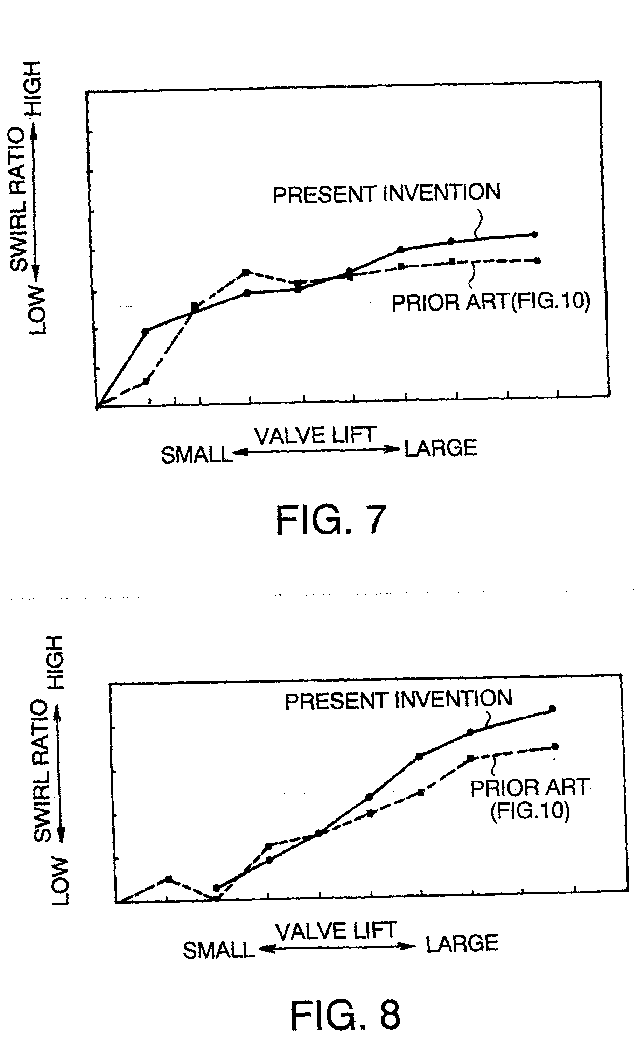

The inventors conducted experiments on a swirl ratio of the first intake port to confirm performances of the first intake port. The swirl ratio is a ratio of an angular velocity of the rotating swirl S in the combustion chamber to an angular velocity of the rotating crankshaft of the engine. The swirl ratios were measured with various lifting positions of the intake valves for the engine of the present invention and that of the prior art shown in Figure 10. Figure 7 illustrates results when both the first and second intake valves were lifted and Figure 8 illustrates the results when the first intake valve was only lifted. In either case, the present invention (solid line) generally drew a better curve than the prior art (broken line): the swirl ratio of the former was generally greater than that of the latter. Particularly, when the intake valve was lifted to a high position, which represents an actual combustion, the swirl ratio of the present invention was higher than that of the prior art by about 20%. Thus, it was confirmed that the present invention considerably improves the swirl ratio.

The present invention is not limited to the illustrated embodiment. For example, the longitudinal center lines of the intake ports 11 and 12 may exactly coincide with the lines 16 and 27 respectively. The height d1 of the projection 13a and the shape/inclination of the slopes 19 and 20 may be changed depending upon a structure of an engine and the like: they may be determined arbitrarily as long as a desired swirl S is generated in the combustion chamber. Referring to Figure 9, the flat portion 28 of the recess 14 in the second intake port 12 may be inclined (solid line) or further recessed (broken line) as viewed from a direction indicated by the arrows F-F of Figure 1.

## Claims

1. An engine having first and second intake ports (11, 12) for each cylinder (3), the first and second intake ports (11, 12) extending generally parallel to each other, the cylinder (3) defining a combustion chamber, the first intake port (11) opening to the combustion chamber (3) at its exit opening (15), a first swirl (81) being generated from the first intake port (11), the second intake port (12) opening to the combustion chamber (3) at its exit opening (26), a second swirl (S2) being generated from the second intake port (12), a collective swirl (S) being generated in the combustion chamber (3) by the first and second swirls (S1, S2), the collective swirl (S) flowing along an inner peripheral wall of the cylinder (3), the first intake port exit opening (15) being downstream of the second intake port exit opening (26) in terms of a rotating direction of the collective swirl (S), the second intake port (12) having a recess (14) near its downstream end to reverse an air flow in the second intake port (12) such that the second swirl (S2) be directed to the same direction the collective swirl (S) flows, **characterized in that** the first intake port (11) has a projection (13a) which is formed in a first lateral wall (18a) of the first intake port (11) furthest from the second intake port (12) and has a triangular shape in a plan section such that the first swirl (S1) is entirely directed to the same direction the collective swirl (S) flows whereby the first and second swirl (S1, S2) do not conflict in the combustion chamber (3).

2. The engine of claim 1, **characterized in that** the projection (13a) is formed at a midway of the first intake port (11).

3. The engine of claim 1 or 2, **characterized in that** the triangular shape of the projection (13a) is defined by two slopes (19, 20) and a curved top (21) which gently joins the two slopes (19, 20).

4. The engine according to any one of claims 1 to 3, **characterized in that** the height (d1) of the triangular shape of the projection (13a) is about one third of a width (d2) of an entrance opening (23) of the first intake port (11).

5. The engine of any one of the foregoing claims, **characterized in that** the first intake port (11) has a recess (13b) in a second lateral wall (18b) opposite the first lateral wall (18a) to deflect the air in the first intake port (11) toward the first lateral wall (18a).

6. The engine of claim 5, **characterized in that** the recess (13b) is formed near a downstream end of the first intake port (11).

7. The engine of any one of the foregoing claims, **characterized in that** the first intake port (11) has a recess (13c) in a bottom wall (18c) to deflect the air in the first intake port (11) toward the direction the collective swirl (S) flows.

8. The engine of any one of the foregoing claims, **characterized in that** the combustion chamber (3) is circular in plan cross section, that the first swirl (S1) is directed to a tangential direction of the circular cross section of the combustion chamber (3) and that the second swirl (S2) is directed to that tangential direction of the circular cross section which is upstream of the first swirl (S1) in terms of the rotating direction of the collective swirl (S).

## Patentansprüche

1. Motor mit einem ersten und einem zweiten Einlaßkanal (11, 12) für jeden Zylinder (3), wobei der erste und der zweite Einlaßkanal (11, 12) im allgemeinen parallel zueinander angeordnet sind, der Zylinder (3) eine Verbrennungskammer definiert und der erste Einlaßkanal (11) an seiner Auslaßöffnung (15) in die Verbrennungskammer (3) mündet, und wobei ein Wirbel (S1) von dem ersten Einlaßkanal (11) erzeugt wird, und der zweite Einlaßkanal (12) an seiner Auslaßöffnung (26) in die Verbrennungskammer (3) mündet und ein zweiter Wirbel (S2) von dem zweiten Einlaßkanal (12) erzeugt wird, durch den ersten und den zweiten Wirbel (S1, S2) in der Verbrennungskammer (3) ein Kollektivwirbel (S) erzeugt wird, der entlang einer inneren Umfangswand des Zylinders (3) strömt, und wobei die Auslaßöffnung (15) des ersten Einlaßkanals relativ zur Auslaßöffnung (26) des zweiten Einlaßkanals bezüglich einer Drehrichtung des Kollektivwirbels (S) stromabwärts gelegen ist, und der zweite Einlaßkanal (12) nahe seinem stromabwärts gelegenen Ende eine Aussparung (14) hat, um einen Luftstrom in dem zweiten Einlaßkanal (12) derart umzukehren, daß der zweite Wirbel (S2) in die gleiche Stromrichtung wie der Kollektivwirbel (S) geführt wird, **dadurch gekennzeichnet, daß** der erste Einlaßkanal (11) einen Vorsprung (13a) hat, der in einer von dem zweiten Einlaßkanal (12) am weitesten entfernten ersten Seitenwand (18a) des ersten Einlaßkanals (11) ausgebildet ist und in der ebenen Schnittansicht eine dreieckige Form aufweist, derart daß der erste Wirbel (S1) in genau die gleiche Stromrichtung wie der Kollektivwirbel (S) geführt wird, wobei der erste und der zweite Wirbel (S1, S2) in der Verbrennungskammer (3) nicht kollidieren.

2. Motor nach Anspruch 1, **dadurch gekennzeichnet, daß** der Vorsprung (13a) in einem mittleren Bereich des ersten Einlaßkanals (11) ausgebildet ist.

3. Motor nach Anspruch 1 oder 2, **dadurch gekennzeichnet, daß** die dreieckige Form des Vorsprungs (13a) durch zwei Schrägen (19, 20) und eine gewölbte Spitze (21) definiert ist, welche die beiden Schrägen (19, 20) sanft miteinander verbindet.

4. Motor nach einem der Ansprüche 1 bis 3, **dadurch gekennzeichnet, daß** die Höhe (d1) der dreieckigen Form des Vorsprungs (13a) in etwa einem Drittel der Breite (d2) einer Eingangsöffnung (23) des ersten Einlaßkanals (11) entspricht.

5. Motor nach einem der vorhergehenden Ansprüche, **dadurch gekennzeichnet, daß** der erste Einlaßkanal (11) eine Aussparung (13b) in einer der ersten Seitenwand (18a) gegenüberliegenden zweiten Seitenwand (18b) hat, um die Luft in dem ersten Einlaßkanal (11) in Richtung der ersten Seitenwand (18a) abzulenken.

6. Motor nach Anspruch 5, **dadurch gekennzeichnet, daß** die Aussparung (13b) nahe einem stromabwärts gelegenen Ende des ersten Einlaßkanals (11) ausgebildet ist.

7. Motor nach einem der vorhergehenden Ansprüche, **dadurch gekennzeichnet, daß** der erste Einlaßkanal (11) in einer unteren Wand (18c) eine Aussparung (13c) hat, um die Luft in dem ersten Einlaßkanal (11) in die Stromrichtung des Kollektivwirbels (S) zu führen.

8. Motor nach einem der vorhergehenden Ansprüche, **dadurch gekennzeichnet, daß** die Verbrennungskammer (3) im ebenen Querschnitt kreisförmig ist, daß der erste Wirbel (S1) in tangentiale Richtung des kreisförmigen Querschnitts der Verbrennungskammer (3) geführt ist und daß der zweite Wirbel (S2) in diese tangentiale Richtung des kreisförmigen Querschnitts geführt ist, die stromaufwärts des ersten Wirbels (S1) bezüglich der Drehrichtung des Kollektivwirbels (S) gelegen ist.

## Revendications

1. Moteur ayant un premier et un second conduits d'admission (11, 12) pour chaque cylindre (3), les premier et second conduits d'admission (11, 12) s'étendant généralement parallèlement l'un à l'autre, le cylindre (3) définissant une chambre de combustion, le premier conduit d'admission (11) s'ouvrant vers la chambre de combustion (3) à son ouverture de sortie (15), un premier tourbillon (S1) étant généré à partir du premier conduit d'admission (11), le second conduit d'admission (12) s'ouvrant vers la chambre de combustion (3) à son ouverture de sortie (26), un second tourbillon (S2) étant généré à partir du second conduit d'admission (12), un tourbillon collectif (S) étant généré dans la chambre de combustion (3) par les premier et second tourbillons (S1, S2), ledit tourbillon collectif (S) s'écoulant le long d'une paroi périphérique interne du cylindre (3), l'ouverture de sortie (15) du premier conduit d'admission étant en aval de l'ouverture de sortie (26) du second conduit d'admission en termes de direction de rotation du tourbillon collectif (S), le second conduit d'admission (12) ayant une cavité (14) près de son extrémité aval afin de renverser le flux d'air dans le second conduit d'admission (12) de façon que le second tourbillon (S2) soit dirigé dans la même direction que celle dans laquelle s'écoule le tourbillon collectif (S), **caractérisé en ce que** le premier conduit d'admission (11) présente une protubérance (13a) qui est formée dans une première paroi latérale (18a) du premier conduit d'admission (11) le plus loin du second conduit d'admission (12), et présente une forme triangulaire en section plane qui est telle que le premier tourbillon (S1) est entièrement dirigé dans la même direction que celle dans laquelle s'écoule le tourbillon collectif (S), de sorte que le premier et le second tourbillons (S1, S2) ne sont pas en conflit dans la chambre de combustion (3).

2. Moteur selon la revendication 1, **caractérisé en ce que** la protubérance (13a) est formée à mi-longueur du premier conduit d'admission (11).

3. Moteur selon l'une quelconque des revendications 1 ou 2, **caractérisé en ce que** la forme triangulaire de la protubérance (13a) est définie par deux pentes (19, 20), et un sommet incurvé (21) qui se raccorde progressivement aux deux pentes (19, 20).

4. Moteur selon l'une quelconque des revendications 1 à 3, **caractérisé en ce que** la hauteur (d1) de la forme triangulaire de la protubérance (13a) est égale à environ le tiers de la largeur (d2) de l'ouverture d'entrée (23) du premier conduit d'admission (11).

5. Moteur selon l'une quelconque des revendications précédentes, **caractérisé en ce que** le premier conduit d'admission (11) présente une cavité (13b) dans une seconde paroi latérale (18b) à l'opposé de la première paroi latérale (18a), afin de dévier l'air dans le premier conduit d'admission (11) vers la première paroi latérale (18a).

6. Moteur selon la revendication 5, **caractérisé en ce que** la cavité (13b) est formée près de l'extrémité aval du premier conduit d'admission (11).

7. Moteur selon l'une quelconque des revendications précédentes, **caractérisé en ce que** le premier conduit d'admission (11) présente une cavité (13c) dans une paroi inférieure (18c) afin de dévier l'air dans le premier conduit d'admission (11) vers la direction dans laquelle s'écoule le tourbillon collectif (S).

8. Moteur selon l'une quelconque des revendications précédentes, **caractérisé en ce que** la chambre de combustion (3) est circulaire en section transversale plane, le premier tourbillon (S1) est dirigé dans une direction tangentielle de la section transversale circulaire de la chambre de combustion (3), et le second tourbillon (S2) est dirigé dans cette direction tangentielle de la section transversale circulaire, en amont du premier tourbillon (S1) en termes de direction de rotation du tourbillon collectif (S).
